# EUROPÄISCHE PATENTANMELDUNG

(11) **EP 2 777 994 A2**
(43) Veröffentlichungstag der Anmeldung: **17.09.2014**
(21) Anmeldenummer: 14000877.2
(22) Anmeldetag: 12.03.2014
(51) Int. Cl.: B60R 25/00

(54) **Vorrichtung und Verfahren zum Sichern von bewegbaren Objekten**

(30) Priorität: 12.03.2013 AT 1912013
(71) Anmelder: Ogris, Kurt, 9201 Krumpendorf (AT)
(72) Erfinder: Ogris, Kurt, 9201 Krumpendorf (AT)
(74) Vertreter: Beer & Partner Patentanwälte KG

(57) **Zusammenfassung**

Bei einer Vorrichtung und einem Verfahren zum Sichern von bewegbaren Objekten (1), insbesondere Landmaschinen, Land-, Wasser- oder Luftfahrzeuge, wird eine Sicherungseinrichtung (2) am bzw. in dem Objekt angebracht, ein Identifikationsmerkmal der Sicherungseinrichtung (2) mit einer Datenübermittlungseinrichtung (3) von der Sicherungseinrichtung (2) ausgelesen und an eine Datenverwaltungseinrichtung (5) weitergeleitet. Dabei erfasst wenigstens ein Sensor (15) in der Sicherungseinrichtung (2) Zustandsdaten der Sicherungseinrichtung und/oder der Umgebung. Ein Objektmerkmal des Objektes (1) wird erfasst und mit dem Identifikationsmerkmal verknüpft. Die Zustandsdaten werden, gegebenenfalls unter Zuhilfenahme der Datenübermittlungseinrichtung (3), an die Datenverwaltungseinrichtung (4) weitergeleitet.

## Beschreibung

Die Erfindung betrifft eine Vorrichtung zum Sichern von bewegbaren Objekten, insbesondere Landmaschinen, Land-, Wasser- oder Luftfahrzeuge, mit einer am bzw. in dem Objekt anbringbaren Sicherungseinrichtung, einer gegebenenfalls externen Datenübermittlungseinrichtung und einer Datenverwaltungseinrichtung.

Die Erfindung betrifft weiters ein Verfahren zum Sichern von bewegbaren Objekten, insbesondere Landmaschinen, Land-, Wasser- oder Luftfahrzeuge, bei dem eine Sicherungseinrichtung am bzw. in dem Objekt angebracht wird, Daten mit einer Datenübermittlungseinrichtung von der Sicherungseinrichtung ausgelesen und an eine Datenverwaltungseinrichtung weitergeleitet werden.

Häufig besteht ein Bedürfnis, über den aktuellen Ort von Objekten informiert zu sein, insbesondere informiert zu werden, wenn Objekte unerlaubt an einen anderen als den vorgesehenen Ort gebracht werden oder Sicherungseinrichtungen von einem Objekt entfernt werden, die Auskunft über den Ort oder den Zustand des Ortes, an dem sich das Objekt befindet, geben sollen.

Dies betrifft insbesondere den Lagerungsprozess von einkaufsfinanzierten Objekten wie Maschinen oder Fahrzeugen z.B. bei Automobilhändlern, Banken, Leasinggesellschaften, diversen gewerblichen Organisationen und Händlern an verschiedenen Orten.

Aufgabe der Erfindung ist es daher, hierfür eine Lösung anzubieten.

Gelöst wird diese Aufgabe mit einer Vorrichtung der eingangs genannten Art mit den kennzeichnen den Merkmalen des Anspruchs 1.

Gelöst wird diese Aufgabe des weiteren mit einem Verfahren der eingangs genannten Art mit den kennzeichnenden Merkmalen des Anspruchs 3.

Dabei wird das zu sichernde Objekt zunächst mit der Sicherheitseinrichtung versehen. Diese kann im oder am Objekt angeordnet, vorzugsweise befestigt werden. Dieses Befestigen erfolgt vorzugsweise lösbar. So kann die Sicherungseinrichtung, beispielsweise nach einem Verkauf des Objektes, wieder entfernt und gegebenenfalls bei einem anderen Objekt wieder verwendet werden. Das Befestigen kann beispielsweise durch Kleben, Stecken, Verschrauben oder Saugnapf erfolgen. Ausführungsformen, bei denen die Sicherungseinrichtung im Objekt auch nach dem Verkauf verbleibt, sind ebenso denkbar.

Die Datenübermittlungseinrichtung erfasst dann ein, vorzugsweise einzigartiges, Identitätsmerkmal der Sicherheitseinrichtung. Dies kann beispielsweise die Identifikation eines RFID-Chips sein, die z.B. über ein RFID-lesefähiges Mobiltelefon, beispielsweise mittels NFC-Technologie, ausgelesen wird. In der Datenverwaltungseinrichtung, beispielsweise einem über das Mobiltelefon erreichbaren Server, wird dann eine Verknüpfung eines einzigartigen Objektmerkmales mit dem Identitätsmerkmal der Sicherungseinrichtung erzeugt. Das Objektmerkmal kann beispielsweise eine Seriennummer, eine Fahrgestellnummer oder dergleichen des Objektes sein. Das Objektmerkmal wird dabei der Datenverwaltungseinrichtung über die Datenübermittlungseinrichtung übermittelt.

In einer beispielhaften Ausführungsform der Erfindung könnte beispielsweise die Sicherungseinrichtung in einem Fahrzeug montiert werden. Eine Bedienperson erfasst, beispielsweise über einen RFID-Chip in oder an der Sicherungseinrichtung, die Identifikation der Sicherungseinrichtung, beispielsweise mit einem RFID-fähigen Mobiltelefon. Das Mobiltelefon, welches in dieser beispielhaften Ausführungsform als Datenübermittlungseinrichtung dient, kann sich dann mit einem Server, der als Datenverwaltungseinrichtung dient, verbinden. Die Bedienperson, liest dann die Fahrgestellnummer, also das Objektmerkmal, ab und gibt diese über das Mobiltelefon dem Server bekannt. Im Server werden dann RFID bzw. Sicherungseinrichtung und Fahrzeug, d.h. Objektmerkmal und Identitätsmerkmal, miteinander verknüpft.

Die Verknüpfung kann in bevorzugten Weiterbildungen der Erfindung um weitere Informationen ergänzt werden. Diese können von der Datenverwaltungseinrichtung erzeugte Daten, wie beispielsweise ein Verschlüsselungscode, das Datum oder die Uhrzeit sein, oder auch von der Bedienperson hinzugefügte Daten, wie beispielsweise ein Digitalfoto des Objektes. Dabei erhöht das Hinzufügen weiterer Informationen jeweils die Sicherheit der Verknüpfung.

Ein weiterer Vorteil des Hinzufügens von weiteren Informationen liegt in der Minimierung von Bedienfehlern. So könnte beispielsweise, nachdem die Bedienperson die Fahrgestellnummer versehentlich falsch eingegeben hat, das Fahrzeug anhand von auf dem Foto erkennbaren Merkmalen, wie beispielsweise Farbe, Fahrzeugtyp, und gegebenenfalls auch Fahrgestellnummer oder Bootsname, gegebenenfalls unter Zuhilfenahme von Datum und Uhrzeit, dennoch richtig erkannt werden.

Erfindungsgemäß erfasst ein Sensor in der Sicherungseinrichtung Zustandsdaten der Sicherungseinrichtung und/oder der Umgebung. Diese Zustandsdaten geben Aufschluss über die Lagerung des Objektes. Beispielsweise erfasst ein Lichtsensor hinter der Windschutzscheibe eines in einer Garage gelagerten/geparkten Fahrzeuges, wenn das Garagentor geöffnet wird. Ein weiterer Anstieg der Helligkeit deutet darauf hin, dass das Fahrzeug aus der Garage bewegt wird. Analog kann eine Änderung der Temperatur oder des Geräuschpegels Aufschluss über Änderungen im Lagerzustand des Fahrzeuges geben. Bewegungs- bzw. Beschleunigungssensoren können Aufschluss über eine Bewegung des Fahrzeuges geben.

Derartige Ereignisse können dabei auf verschiedene Arten behandelt werden. Die Sicherungseinrichtung kann sie lediglich speichern. In diesem Fall können die Daten später verglichen werden und es lässt sich feststellen ob eine unerlaubte Änderung des Lagerzustandes des Fahrzeuges erfolgt ist. Alternativ oder zusätzlich kann die Sicherungseinrichtung auch anhand einer internen Liste vergleichen, ob bestimmte Zustandsdaten auf einen erlaubten Lagerzustand hinweisen und bei einem Fehler gegebenenfalls eine Eskalation auslösen.

Bevorzugt verfügt die Sicherungseinrichtung über mehrere unterschiedliche Sensoren. So können verschiedene Nachteile einzelner Sensoren ausgeglichen werden. Soll beispielsweise ein Fahrzeug in einem Transportcontainer transportiert werde, sind Änderungen der Lage des Fahrzeuges erlaubt. Hingegen kann ein Öffnen des Containers unerwünscht oder gar verboten sein. Ein Lichtsensor kann ein Öffnen des Containers erfassen. So kann am Bestimmungsort festgestellt werden, ob beispielsweise eine Manipulation am Fahrzeug erfolgt ist. Analog könnte sich die Sicherungseinrichtung auch unter der Motorhaube befinden und ein Lichtsensor der Sicherungseinrichtung könnte erfassen, dass die Motorhaube geöffnet wurde.

Weitere bevorzugte und vorteilhafte Durch- und Ausführungsformen werden in der Folgen anhand der Zeichnungen beschrieben. Es zeigt in zum Teil stark schematisierter Darstellung:
- Fig. 1: eine Prinzipskizze der Erfindung,
- Fig. 2: ein vereinfachtes Flussbild eines Erfassungsprozesses und
- Fig. 3: ein Vereinfachtes Flussbild eines erfindungsgemäßen Lagerprozesses.

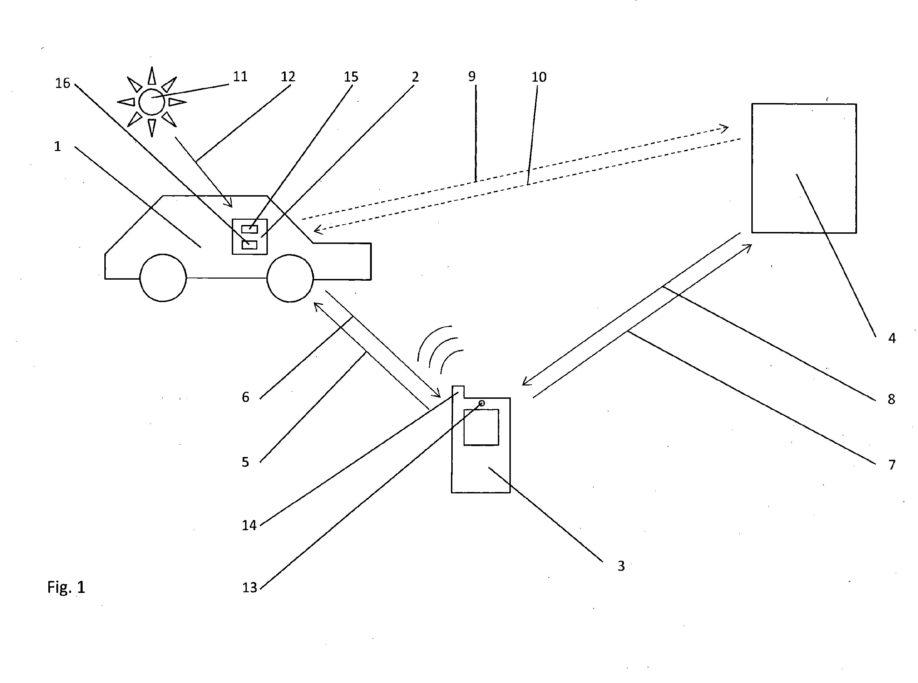

Die Fig. 1 zeigt ein Objekt 1, in welchem sich eine Sicherungseinrichtung 2 befindet, sowie eine Datenübermittlungseinrichtung 3 und eine Datenverwaltungseinrichtung 4. Zwischen der Sicherungs-, der Datenübermittlungs- und der Datenverwaltungseinrichtung 2, 3, 4 kann vorzugsweise drahtlose Kommunikation erfolgen, welche durch zum Teil strichlierte Pfeile 5, 6, 7, 8, 9, 10 dargestellt ist. Ein Zustand der Umgebung, der durch in der Sicherungseinrichtung angeordnete Sensoren 15 erfassbar ist, ist symbolisch durch eine Lichtquelle 11 dargestellt, deren Wirken auf die Sensoren 15 ein Pfeil 12 zeigt. Die Datenübermittlungseinrichtung 3 weist im dargestellten Bespiel zusätzlich eine Kamera 13 und eine RFID-Lese- und -Schreib-Vorrichtung 14 auf, mit welcher sie einen RFID-Chip der Sicherungseinrichtung 2 auslesen und beschreiben kann. Das Zusammenspiel der einzelnen Komponenten zeigen die folgenden Flussbilder in einer beispielhaften Durchführungsform der Erfindung.

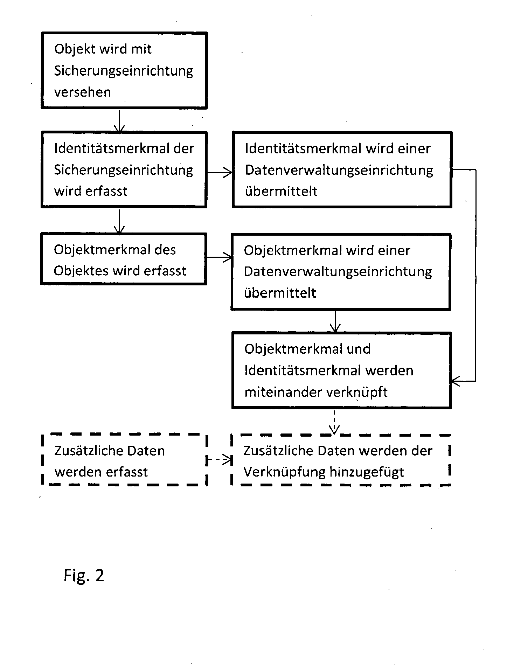

Die Fig. 2 zeigt einen vereinfachten Erfassungsprozess für ein zu sicherndes Objekt 1. Dabei wird in einem ersten Schritt das Objekt 1 mit der Sicherungseinrichtung 2 versehen. Dann wird ein Identitätsmerkmal der Sicherungseinrichtung erfasst. Hierfür kann beispielsweise der RFID-Chip der Sicherungseinrichtung ausgelesen werden. Ausführungsformen, bei denen eine andere Verbindung zur Sicherungseinrichtung hergestellt wird sind ebenso denkbar. Beispielsweise könnten auch eine Bluetooth- oder eine galvanische Steckverbindung, beispielsweise eine USB-Verbindung hergestellt werden. Das Identitätsmerkmal wird dann von der Datenübermittlungseinrichtung 3 an die Datenverwaltungseinrichtung 4 übermittelt. Dies kann optional, wie durch den strichlierten Pfeil 10 dargestellt, auch direkt, beispielsweise über ein GSM-Modul in der Sicherungseinrichtung 2, von der Sicherungseinrichtung 2 an die Datenverwaltungseinrichtung 4 erfolgen. Alternativ kann das Identitätsmerkmal, wie durch die Pfeile 5, 6 dargestellt, durch die Datenübermittlungseinrichtung 3 ausgelesen und, wie durch den Pfeil 8 dargestellt, an die Datenverwaltungseinrichtung 4 übermittelt werden. Dann wird ein eindeutiges Objektmerkmal erfasst; dies kann beispielsweise bei einem Fahrzeug die Fahrgestellnummer oder bei einem Boot die HIN (Hull Identification Number) sein. In einer einfachen Durchführungsform des Verfahrens wird das Objektmerkmal einfach von einer Bedienperson abgelesen, in die Datenübermittlungseinrichtung 3 eingegeben und von dieser an die Datenverwaltungseinrichtung 4 übermittelt. Aufwändigere Aus- bzw. Durchführungsformen, bei denen das Objektmerkmal ebenfalls elektronisch ausgelesen wird, sind ebenso denkbar. Ebenso können auch zunächst alle Daten bzw. Merkmale erfasst und dann gesammelt an die Datenverwaltungseinrichtung 4 übermittelt werden. Die Datenverwaltungseinrichtung 4 stellt dann eine Verknüpfung des Objektmerkmales und des Identitätsmerkmales her. Optional können dieser Verknüpfung weitere Informationen hinzugefügt werden. Dies können von der Sicherheitseinrichtung 2 erfasste Daten, wie beispielsweise ein über ein GPS-Modul der Sicherungseinrichtung 2 ermittelter Standort des Objektes 1 bzw. der Sicherungseinrichtung 2, ein Umgebungszustand oder ein Objektzustand, von der Bedienperson und/oder der Datenübermittlungseinrichtung 3 erfasste Daten, wie beispielsweise ein mit der Kamera 13 der Datenübermittlungseinrichtung 3 gemachtes Foto des Objektes 1, und/oder auch von der Datenverwaltungseinrichtung 4 selbst erzeugte Daten, wie beispielsweise Datum oder Uhrzeit, sein. Mit dem Fertigstellen der Verknüpfung, inklusive der gegebenenfalls hinzugefügten zusätzlichen Daten, ist das Erfassen abgeschlossen und das Objekt 1 wird gelagert.

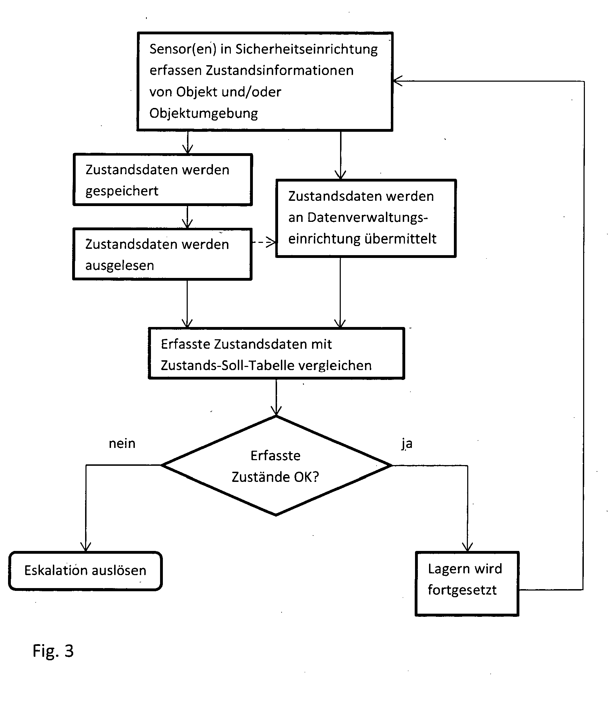

Die Fig. 3 zeigt einen beispielhaften Lagerprozess unter Anwendung des erfindungsgemäßen Verfahrens. Dabei erfasst wenigstens ein Sensor 15 der Sicherungseinrichtung 1 Zustandsdaten des Objektes 1, der Sicherungseinrichtung 2 und/oder der Umgebung der Sicherungseinrichtung 2 bzw. des Objektes 1. Die dabei entstehenden Zustandsdaten werden entweder direkt an die Datenverwaltungseinrichtung 4 übermittelt oder in einem dafür vorgesehenen Speicher 16 der Sicherungseinrichtung 2 gespeichert. In letzterem Fall werden die Zustandsdaten in einem eigenen Schritt, beispielsweise durch das Datenübermittlungsgerät 3, ausgelesen. Dann werden, entweder durch eine Software auf dem Datenübermittlungsgerät 3 selbst oder durch eine Software auf der Datenverwaltungseinrichtung 4, gegebenfalls nach dem die ausgelesenen Zustandsdaten übermittelt wurden, die erfassten Zustandsdaten mit einer Zustands-Soll-Tabelle verglichen. Liegen alle erfassten Daten im durch die Tabelle vorgegebenen Rahmen, kann das Lagern fortgesetzt werden. Liegen Daten außerhalb des vorgegebenen Rahmens wird eine Eskalation, beispielsweise durch Rufen des Sicherheitsdienstes, ausgelöst.

Selbstverständlich kann eine Eskalation auch im Vorfeld unterbunden werden, beispielsweise um eine erlaubte Probefahrt zu machen.

## Patentansprüche

1. Vorrichtung zum Sichern von bewegbaren Objekten (1), insbesondere Landmaschinen, Land-, Wasser- oder Luftfahrzeuge, mit einer am bzw. in dem Objekt (1) anbringbaren Sicherungseinrichtung (2), einer gegebenenfalls externen Datenübermittlungseinrichtung (3) und einer Datenverwaltungseinrichtung (4), **dadurch gekennzeichnet, dass** die Sicherungseinrichtung (2) wenigstens einen Sensor (15) und wenigstens einen beschreibbaren und auslesbaren Speicher (16) aufweist.

2. Vorrichtung, **dadurch gekennzeichnet, dass** der Sensor (15) ein Lage-, Beschleunigungs-, Licht-, Temperatur-, oder Geräuschsensor ist.

3. Verfahren zum Sichern von bewegbaren Objekten (1), insbesondere Landmaschinen, Land-, Wasser- oder Luftfahrzeuge, bei dem eine Sicherungseinrichtung (2) am bzw. in dem Objekt angebracht wird, ein Identifikationsmerkmal der Sicherungseinrichtung (2) mit einer Datenübermittlungseinrichtung (3) von der Sicherungseinrichtung (2) ausgelesen und an eine Datenverwaltungseinrichtung (5) weitergeleitet werden, **dadurch gekennzeichnet, dass** wenigstens ein Sensor (15) in der Sicherungseinrichtung (2) Zustandsdaten der Sicherungseinrichtung und/oder der Umgebung erfasst, dass ein Objektmerkmal des Objektes (1) erfasst wird und mit dem Identifikationsmerkmal verknüpft wird und dass die Zustandsdaten, gegebenenfalls unter Zuhilfenahme der Datenübermittlungseinrichtung (3), an die Datenverwaltungseinrichtung (4) weitergeleitet werden.

4. Verfahrennach Anspruch 3 **dadurch gekennzeichnet, dass** der Sensor (15) Lage-, Beschleunigungs-, Helligkeits-, Temperatur- oder Geräuschpegelveränderungen erfasst.

5. Verfahren nach Anspruch 3 oder 3, **dadurch gekennzeichnet, dass** die Sicherheitseinrichtung (2) zu Beginn im bzw. am Objekt befestigt wird.

6. Verfahren nach einem der Ansprüche 3 bis 5, **dadurch gekennzeichnet, dass** das Verknüpfen in der Datenübermittlungs- oder der Datenverwaltungseinrichtung (3, 4) erfolgt.

7. Verfahren nach Anspruch 5, **dadurch gekennzeichnet, dass** das Befestigen lösbar erfolgt und dass die Sicherheitseinrichtung (2) wieder entfernt und bei einem anderen Objekt (1) wieder verwendet wird.

8. Verfahren nach einem der Ansprüche 3 bis 7, **dadurch gekennzeichnet, dass** die Verknüpfung um weitere Informationen ergänzt wird, insbesondere ein Digitalfoto des Objektes (1).
